# EUROPÄISCHE PATENTSCHRIFT

(11) **EP 2 446 522 B1**
(45) Veröffentlichungstag und Bekanntmachung des Hinweises auf die Patenterteilung: **18.09.2013**
(21) Anmeldenummer: 10723569.9
(22) Anmeldetag: 25.05.2010
(51) Int. Cl.: H02K 33/12, H02K 1/34, H01F 7/16

(54) **LINEARSTELLEINHEIT FÜR EINE SCHALTEINRICHTUNG EINES GETRIEBES**
LINEAR ACUATOR FOR A TRANSMISSION SHIFT DEVICE
ACTIONNEUR LINEAIRE POUR UN DISPOSITIF DE COMMANDE D'UNE TRANSMISSION

(30) Priorität: 24.06.2009 DE 102009027131
(43) Veröffentlichungstag der Anmeldung: 02.05.2012
(73) Patentinhaber: ZF Friedrichshafen AG, 88038 Friedrichshafen (DE)
(72) Erfinder: SCHUH, Henrik, 88045 Friedrichshafen (DE); PUTH, Thomas, 88046 Friedrichshafen (DE); KWESELEIT, Peter, 88690 Uhldingen-Mühlhofen (DE)
(86) Internationale Anmeldenummer: PCT/EP2010/057167
(87) Internationale Veröffentlichungsnummer: WO 2010/149447

(56) Entgegenhaltungen:
- DE-A1- 19 953 788
- DE-A1-102007 004 181
- DE-T5-112006 002 553
- US-A- 4 751 487
- US-A1- 2008 136 266

## Beschreibung

Die Erfindung betrifft eine Linearstelleinheit für eine Schalteinrichtung eines Kraftfahrzeuggetriebes, mit einem Stator, welcher aus einem ferromagnetischen Material besteht und mehrere, in Längsrichtung hintereinander liegende Magnetspulen trägt, die im Einzelnen beim Hindurchleiten eines elektrischen Stromes ein Magnetfeld ausbilden, und einem ferromagnetischen Anker, welcher im Stator konzentrisch angeordnet und in Längsrichtung verschiebbar geführt ist und bei Einwirkung eines Magnetfeldes in Richtung der dieses erzeugenden Magnetspule eine translatorische Bewegung ausführt.

Bei Getrieben, insbesondere bei Schaltgetrieben von Kraftfahrzeugen, finden häufig Stelleinheiten zur Lösung bestimmter Stellaufgaben Anwendung. Je nach Ausführung des jeweiligen Getriebes reichen diese Aufgaben von einer Unterstützung der Handschaltkraft des Fahrzeugführers bis zu einer direkten Betätigung von Schaltelementen zum Schalten eines Übersetzungsverhältnisses. Im Bereich der Nutzfahrzeuge werden die Stelleinheiten hierbei üblicherweise als hydraulisch oder pneumatisch betriebene Systeme ausgeführt, die in einen Druckversorgungskreislauf des jeweiligen Fahrzeuges eingebunden sind. In diesen Fällen wird die auszuführende Stellbewegung durch Druckbeaufschlagung der Stelleinheit ausgelöst. Bei Fahrzeugsystemen, welche nicht über derartige hydraulische oder pneumatische Versorgungskreisläufe verfügen, kommen hingegen häufig elektronische Stelleinheiten zum Einsatz. Zum Erzeugen von gewünschten linearen Stellbewegungen finden in diesen Fällen zum Einen Elektromotoren Anwendung, deren rotatorische Bewegung mittels einer nachgeschalteten Mechanik in die gewünschte translatorische Bewegung umgesetzt wird. Allerdings sorgt diese Bewegungsumwandlung für eine Verminderung des Wirkungsgrades und eine Erhöhung der Bauteilanzahl. In anderen Fällen werden elektromagnetisch gesteuerte Linearstelleinheiten verwen-det, bei welchen die gewünschte Linearbewegung durch eine gezielte Bestromung von Magnetspulen direkt hervorrufbar ist.

Aus der DE 11 2006 002 553 T5 ist eine derartige Linearstelleinheit für Kraftfahrzeuggetriebe bekannt, bei welcher ein, aus einem ferromagnetischen Material bestehender Stator in sich einen konzentrisch angeordneten Anker in Längsrichtung verschiebbar führt. Zudem trägt der Stator in vorgesehenen Ausnehmungen zwei, in Längsrichtung hintereinander liegende Magnetspulen, die bei Versorgung mit elektrischem Strom jeweils ein Magnetfeld ausbilden. Im Bereich der Magnetspulen sind auf dem Anker, welcher ebenfalls aus einem ferromagnetischen Material besteht, des Weiteren Permanentmagnetringe aufgesetzt. Eine Bestromung von einer der Spulen führt dazu, dass der Anker aufgrund des sich ausbildenden Magnetfeldes translatorisch in Richtung der jeweiligen Magnetspule und durch diese hindurch bewegt wird. Die Permanentmagnetringe sorgen dabei für eine Vergrößerung des nutzbaren Arbeitshubes der Linearstelleinheit, indem auch bei größeren Abständen zwischen Anker und der jeweiligen Magnetspule eine hohe Stellkraft aufgrund eines verbesserten Magnetflusses erreicht werden kann. Ohne die Permanentmagnete wäre ein Arbeitshub mit einer hohen Stellkraft ansonsten stark verkürzt.

Die Ausführung einer Linearstelleinheit gemäß des Standes der Technik weist allerdings den Nachteil auf, dass Permanentmagnete mechanisch und thermisch weniger belastbar sind als Ausführungen, bei welchen lediglich Magnetspulen und ferromagentische Bauteile Anwendung finden. Zudem treten bei Permanentmagneten auch im unbestromten Zustand Selbsthaltekräfte auf, die insbesondere bei Getriebeanwendungen zu unerwünschten Effekten führen können. So erzeugt eine Linearstelleinheit mit Permanentmagneten, welche im Bereich des Kraftfahrzeuggetriebes zur Schaltkraftunterstützung des Fahrzeugführers vorgesehen ist, auch im unbestromten Zustand der Magnetspulen Kräfte. Dementsprechend wird zu Zeitpunkten, bei welchen keine unterstützende Kraft benötigt oder erwünscht ist, eine Haltekraft erzeugt und somit die aufzubringende Schaltkraft und das Schaltgefühl beeinflusst. Schließlich erhöht die Verwendung von Permanentmagneten auch den Herstellungsaufwand von Linearstelleinheiten.

Aus der US 4,751,487 A ist außerdem eine Linearstelleinheit gemäß des Oberbegriffs des Anspruchs 1 bekannt, wobei der Anker der Linearstelleinheit im Wesentlichen konisch ausgeführt ist und auf einer Seite eine einzige Stufe aufweist. Hierdurch ist der Stellkraftverlauf der Linearstelleinheit über dem Arbeitshub des Ankers relativ unflexibel an den jeweiligen Einsatzfall anpass-bar. Auch den Schriften DE 19953788 A1 und US 2008/0136266 A1 sind Line-arstelleinheiten gemäß des Oberbegriffs des Anspruchs 1 entnehmbar. Die DE 19953788 A1 offenbart eine Linearstelleinheit mit einem sich zweistufig verjüngenden Anker und Stator, wobei die Steigungen von Anker und Stator bei einer der Stufen unterschiedlich sind. Die US 2008/0136266 A1 offenbart einen sich fünfstufig verjüngenden Anker und Stator, wobei die durch die Stufen gebildeten Steigungen von Anker und Stator identisch zueinander sind.

Es ist die Aufgabe der vorliegenden Erfindung, eine Linearstelleinheit für eine Schalteinrichtung eines Kraftfahrzeuggetriebes zu schaffen, die sich durch eine hohe Belastbarkeit auszeichnet, gleichzeitig aber hohe Stellkräfte und lange Arbeitshübe ermöglicht. Des Weiteren ist ein niedriger Herstellungsauf-wand anzustreben. Hierbei soll diese Linearstelleinheit für Schalteinrichtungen von Schaltgetrieben geeignet sein. Außerdem ist eine Aufgabe der Erfindung den Stellkraftverlauf der Linearstelleinheit über dem Arbeitshub des Ankers flexibel an den jeweiligen Einsatzfall anpassbar zu gestalten.

Diese Aufgabe wird ausgehend von den Oberbegriffen der nebengeordneten Ansprüche 1 und 6 in Verbindung mit deren jeweils kennzeichnenden Merkmalen gelöst. Die jeweils darauffolgenden, abhängigen Ansprüche geben vorteilhafte Weiterbildungen der Erfindung wieder.

Die Erfindung umfasst die technische Lehre, dass der Anker an Enden in Längsrichtung jeweils über mindestens eine, stufenartig ausgeprägte Verjüngung verfügt, die mit mindestens einem, am Stator vorgesehenen, radial nach innen gerichteten Absatz in Wirkverbindung steht. Diese Wirkverbindung gestaltet sich dabei derart, dass ein Anstieg einer Stellkraft in Abhängigkeit einer axialen Relativposition des Ankers zum Stator und einer hiermit einhergehenden relativen Überdeckung der mindestens einen Verjüngung mit dem mindestens einen Absatz veränderbar ist. Denn durch die mindestens eine Verjüngung am Anker und den mindestens einen Absatz am Stator werden mehrere kleine Luftspalte zwischen Anker und Stator entlang des Arbeitshubes des Ankers geschaffen. Diese Luftspalte erfahren allerdings eine Veränderung, wenn sich der Anker in Richtung Magnetspule bewegt. So verringert sich der jeweilige Luftspalt entsprechend einer zunehmenden Überdeckung der Verjüngung mit dem jeweiligen Absatz am Stator, was in einer Verbesserung des magnetischen Flusses und damit einer größeren Steigung der Stellkraft resultiert. Dementsprechend ist es möglich, mittels der Linearstelleinheit hohe Kräfte auch bei großen Arbeitshüben zu erreichen, ohne dabei auf Permanentmagnete zurückgreifen zu müssen. Gleichzeitig ist hierbei die Belastbarkeit des Systems verbessert, sowie der Herstellungsaufwand vermindert. Zudem ist die erfindungsgemäße Linearstelleinheit für Schalteinrichtungen von Kraftfahrzeuggetrieben geeignet, da auch bei einer Bewegung des Ankers in einem nicht bestromten Zustand der Magnetspulen keine Selbsthaltekräfte auftreten.

Gemäß einer Ausführungsform der Erfindung verfügt der Anker pro Ende über mehrere stufenartig ausgeprägte Verjüngungen, die mit mehreren Absätzen am Stator in Wirkverbindung stehen. Vorteilhafterweise sind diese mehreren Verjüngungen und/oder die mehreren Absätze dabei in Bezug auf Erstreckung in radialer und/oder axialer Richtung unterschiedlich gestaltet. Durch die somit geschaffenen Konturen an Anker und Stator und die dementsprechend vorhandenen, variablen Luftspalte, kann der Stellkraftverlauf über dem Arbeitshub des Ankers sehr flexibel gestaltet werden. Dementsprechend kann auch die Lage eines Kraftmaximums optimal an den jeweiligen Einsatzfall angepasst werden.

In Weiterbildung der Erfindung ist der Anker als rotationssymmetrisches Bauteil ausgeführt. Dies hat den Vorteil, dass die erfindungsgemäße Linearstelleinheit auch bei Systemen Anwendung finden kann, bei welchen über die Stelleinheit eine lineare Bewegung erzeugt bzw. unterstützt werden soll, gleichzeitig aber auch Relativverdrehungen zwischen Anker und Stator ermöglicht werden müssen, beispielsweise bei Anwendung im Bereich einer Schaltwelle eines Schaltgetriebes.

Es ist eine weitere Ausführungsform der Erfindung, dass der mindestens eine Absatz des Stators zugleich einen Axialanschlag für den Anker ausbildet. Hierdurch kann eine mechanische Hubbegrenzung auf einfache Art und Weise realisiert werden.

Entsprechend einer weiteren, vorteilhaften Ausgestaltung der Erfindung bestehen der Stator und/oder der Anker aus Stahl. Dadurch sind neben ferromagnetischen Eigenschaften auch hohe Festigkeiten erreichbar. Hierbei kommt insbesondere eine Ausführung des Ankers und des Stators aus C15 in Betracht.

Es ist eine vorteilhafte Weiterbildung der Erfindung, dass die Linearstelleinheit bei Verwendung im Bereich einer Schalteinrichtung eines Schaltgetriebes eine je zugehörige Schaltschiene oder Schiebemuffe der Schalteinrichtung betätigt, um gezielt ein Übersetzungsverhältnis zu schalten. Da der Verlauf der Stellkraft über dem Arbeitshub der Linearstelleinheit entsprechend der Gestaltung der jeweiligen Verjüngungen und Absätze optimal auf die jeweilige Anforderung im Bereich des Schaltgetriebes anpassbar ist, können insbesondere im Bereich automatisierter Schaltgetriebe Schaltbewegungen kompakt und effizient ausgeführt werden.

Entsprechend einer weiteren, vorteilhaften Ausführung der Erfindung findet die erfindungsgemäße Linearstelleinheit im Bereich eines, nach Art eines Handschaltgetriebes ausgebildeten Schaltgetriebes Anwendung und überlagert eine Schaltkraft eines Fahrzeugführers mit der Stellkraft. Dadurch kann eine kompakte und robuste Anordnung zur Schaltkraftunterstützung oder zur Verhinderung von Fehlschaltungen geschaffen werden.

Weitere, die Erfindung verbessernde Maßnahmen werden nachstehend gemeinsam mit der Beschreibung einer bevorzugten Ausführungsform der Erfindung anhand der Figuren näher dargestellt. Es zeigt:
- Fig.1: eine Schnittansicht der erfindungsgemäßen Linearstelleinheit;
- Fig.2A, 2B: Detailansichten des Bereichs D aus Fig.1 in verschiedenen Positionen eines Ankers der Linearstelleinheit;
- Fig.3: ein Diagramm des Stellkraftverlaufs über dem Arbeitshub des Ankers der Linearstelleinheit aus Fig.1; und
- Fig.4: eine stark schematische Darstellung einer Schalteinrichtung mit der erfindungsgemäßen Linearstelleinheit.

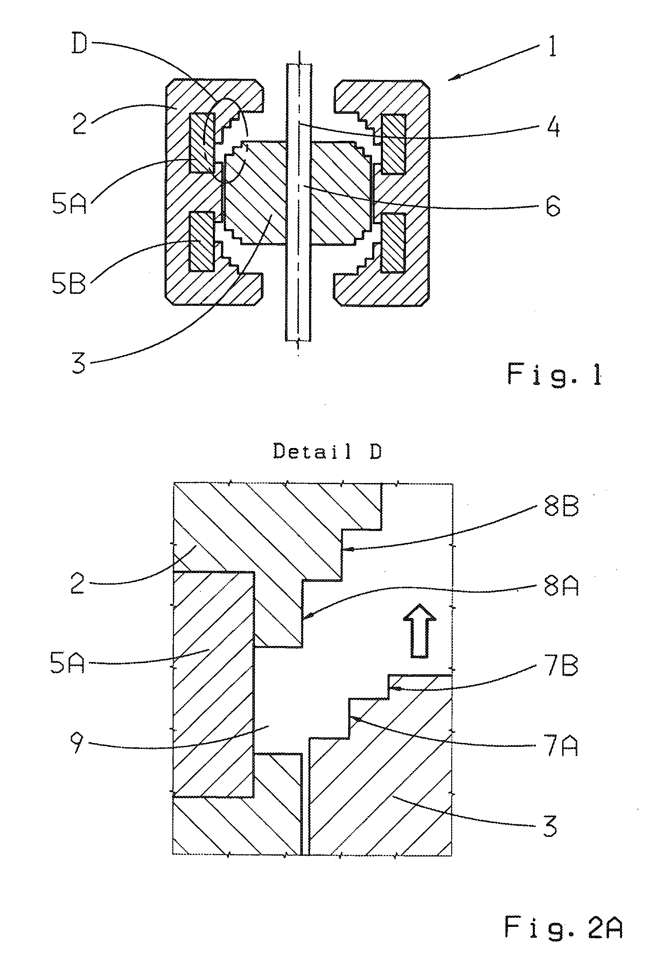

In Fig.1 ist eine Schnittansicht der erfindungsgemäßen Linearstelleinheit 1 zu sehen, welche über einen Stator 2 aus einem ferromagnetischen Material, beispielsweise Stahl, verfügt, der als Hohlkörper ausgeführt ist. Im Hohlraum des Stators 2 ist ein Anker 3 konzentrisch angeordnet und zudem entlang einer Längsmittelachse 4 verschiebbar geführt. Der Anker 3 besteht dabei ebenfalls aus einem ferromagnetischen Material und weist eine zylinderförmige Gestalt auf. In Längsrichtung trägt der Stator 2 zudem zwei hintereinander liegende und beiderseits des Ankers 3 angeordnete Magnetspulen 5A und 5B, die in hierfür vorgesehenen Ausnehmungen des Stators 2 positioniert sind und jeweils bei Hindurchleiten eines elektrischen Stromes ein Magnetfeld ausbilden. Dabei bewegt sich der Anker 3 in Richtung der das Magnetfeld erzeugende Magnetspule 5A oder 5B und führt dabei ein, durch ihn hindurchreichendes Gestänge 6, welches Teil einer äußeren Schaltung einer Schalteinrichtung ist. Es ist allerdings ebenso denkbar, über den Anker 3 eine Schaltschiene einer Schalteinrichtung oder ein Gestänge zum mittelbaren Verschieben einer Schiebemuffe einer Schalteinrichtung mitzuführen.

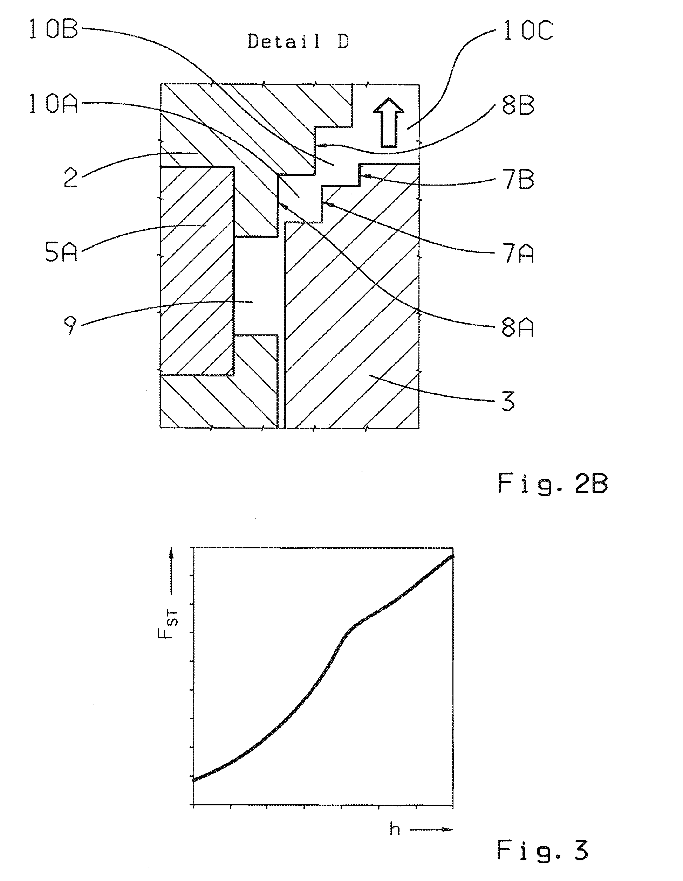

Aus den Figuren 2A und 2B, die Detailansichten des Details D aus Fig.1 darstellen, ist zu erkennen, dass der Anker 3 über stufenartig ausgeprägte Verjüngungen 7A und 7B verfügt, die umlaufend an den Enden des Ankers 3 in Längsrichtung ausgebildet sind. Diese Verjüngungen 7A und 7B liegen dabei am Stator 2 vorgesehenen Absätzen 8A und 8B gegenüber. In der in Fig.2A dargestellten Position befindet sich der Anker 3 in einer Mittelstellung. Wird nun die Magnetspule 5A bestromt, so bildet sich ein Magnetfeld aus, welches eine translatorische Verschiebung des Ankers 3 aus der Mittelstellung in Richtung und durch die Magnetspule 5A hindurch bewirkt, wie durch den Richtungspfeil angedeutet. Dabei wird allerdings zunächst aufgrund eines, in radialer Richtung zwischen Anker 3 und Magnetspule 5A vorhandenen, fixen Luftspalts 9 ein niedriger magnetischer Fluss und dementsprechend ein geringer Anstieg einer Stellkraft F_{ST} über einem Hub h des Ankers 3 erreicht, wie im Anfangsbereich des Diagramms in Fig. 3 zu sehen ist. Ab einem Überschneiden der ersten Verjüngung 7A des Ankers 3 mit dem ersten Absatz 8A des Stators 2 wird jedoch der magnetische Fluss von der Magnetspule 5A über Stator 2 und Anker 3 aufgrund eines Überbrückens des Luftspalts 9 durch den nunmehr vorherrschenden, geringen Abstand zwischen Anker 3 und Stator 2 und einer hiermit einhergehenden Verdichtung der magnetischen Feldlinien stark verbessert. Dies resultiert in einem steileren Anstieg der Stellkraft F_{ST}, wie auch aus Fig. 3 hervorgeht. Bei einer weiteren translatorischen Bewegung des Ankers 3 werden weitere, zwischen Anker 3 und Stator 2 vorhandene, veränderliche Luftspalte 10A bis 10C zunehmend verkleinert. So überschneidet ab einer bestimmten axialen Position auch die zweite Verjüngung 7B mit dem zweiten Absatz 8B und überbrückt hierdurch den Luftspalt 10A, was den magnetischen Fluss erneut verbessert. Allerdings findet dies zu einer axialen Position statt, bei welcher der Anker 3 schon beinahe vollständig durch die Magnetspule 5A hindurch gewandert ist. In Kombination mit einem zunehmenden Einfluss von Verlusten resultiert dies insgesamt in einem niedrigeren Anstieg der Stellkraft F_{ST} im Bereich höherer Hübe.

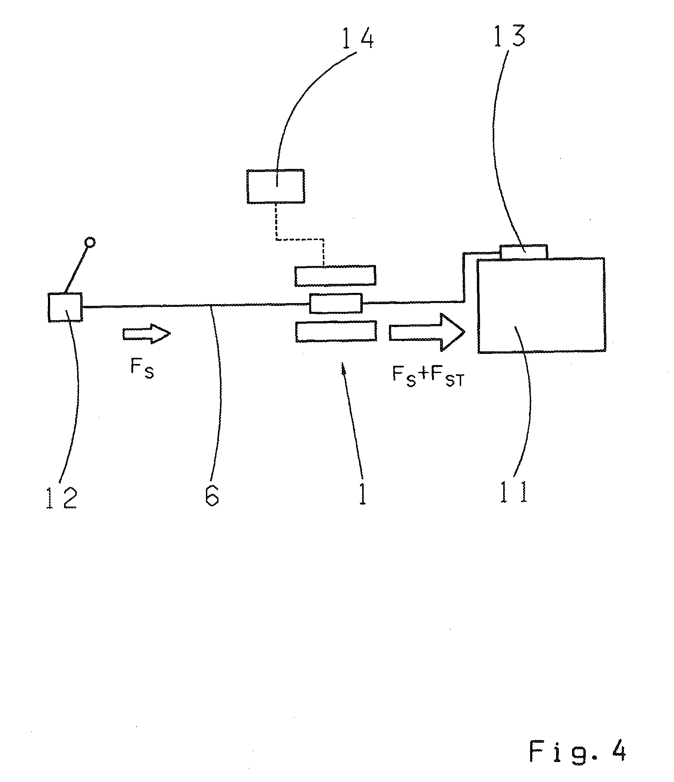

Aus Fig.4 ist des Weiteren eine stark schematische Darstellung einer Schalteinrichtung eines Schaltgetriebes 11 ersichtlich, bei welcher die erfindungsgemäße Linearstelleinheit 1 Anwendung findet. Diese ist dabei im Bereich des Gestänges 6 platziert, welches einen Handschalthebel 12 mit einer Schaltvorrichtung 13 des Schaltgetriebes 11 verbindet. Zur Steuerung der Stellbewegungen steht die Linearstelleinheit 1 ferner mit einer Steuereinrichtung 14, beispielsweise einem Getriebesteuergerät, in Kontakt. Entsprechend einer Ansteuerung der Linearstelleinheit 1 ist es hierbei möglich, eine durch einen Fahrzeugführer am Handschalthebel 12 aufgebrachte Schaltkraft F_{S} mit der Stellkraft F_{ST} zu überlagern. Dabei kann dies entweder gleichgerichtet, wie dargestellt, oder entgegengerichtet erfolgen, um eine drohende Fehlschaltung durch den Fahrzeugführer zu verhindern.

Daneben ist die erfindungsgemäße Linearstelleinrichtung 1 aufgrund der Lage und der erreichbare Höhe des Kraftmaximums der Stellkraft F_{ST} auch für das direkte Erzeugen von Schaltbewegungen von Schiebemuffen oder Schaltschienen von Schaltgetrieben geeignet. Insgesamt kann entsprechend der Gestaltung der Verjüngungen 7A und 7B am Anker 3 und der Absätze 8A und 8B am Stator 2 der Verlauf der Stellkraft F_{ST} über dem Hub h des Ankers 3 flexibel gestaltet werden.

### Bezugszeichen

- 1: Linearstelleinheit
- 2: Stator
- 3: Anker
- 4: Längsmittelachse
- 5A, 5B: Magnetspulen
- 6: Gestänge
- 7A, 7B: Verjüngungen Anker
- 8A, 8B: Absätze Stator
- 9: fixer Luftspalt
- 10A-10C: variable Luftspalte
- 11: Schaltgetriebe
- 12: Handschalthebel
- 13: Schaltvorrichtung
- 14: Steuereinrichtung

- F_{ST}: Stellkraft
- F_{S}: Schaltkraft
- h: Hub Anker

## Patentansprüche

1. Linearstelleinheit (1) für eine Schalteinrichtung eines Kraftfahrzeuggetriebes,
mit einem Stator (2), welcher aus einem ferromagnetischen Material besteht und mehrere, in Längsrichtung hintereinanderliegende Magnetspulen (5A, 5B) trägt, die im Einzelnen beim Hindurchleiten eines elektrischen Stromes ein Magnetfeld ausbilden, und
mit einem ferromagnetischen Anker (3), welcher im Stator (2) konzentrisch angeordnet und in Längsrichtung verschiebbar geführt ist und bei Einwirkung eines Magnetfeldes in Richtung der dieses erzeugenden Magnetspulen (5A; 5B) eine translatorische Bewegung ausführt,
**dadurch gekennzeichnet, dass**
der Anker (3) an seinen Enden in Längsrichtung jeweils über mehrere umlaufende, stufenartig ausgeprägte Verjüngungen (7A, 7B) verfügt, die mit mehreren am Stator (2) vorgesehenen, radial nach innen gerichteten Absätzen (8A, 8B) derart in Wirkverbindung stehen,
dass in Abhängigkeit einer axialen Relativposition des Ankers (3) zum Stator (2) und einer hiermit einhergehenden relativen Überdeckung der Verjüngungen (7A; 7B) mit den Absätzen (8A; 8B) ein Anstieg einer Stellkraft (F_{ST}) veränderbar ist, wozu
die mehreren Verjüngungen (7A, 7B) und die mehreren Absätze (8A, 8B) jeweils eine Erstreckung in axialer Richtung und eine Erstreckung in radialer Richtung aufweisen sowie jeweils eine Steigung, die sich aus dem Verhältnis von dieser axialen Erstreckung zur dieser radialen Erstreckung bildet,
wobei sowohl die axialen Erstreckungen der mehreren Verjüngungen (7A, 7B) zueinander unterschiedlich sind, als auch die axialen Erstreckungen der mehreren Absätze (8A, 8B) zueinander unterschiedlich sind, sodass
die Steigungen der mehreren Absätze (8A, 8B) und die Steigungen der mehreren Verjüngungen (7A, 7B) radial nach innen hin unterschiedlich abnehmen und die axiale Erstreckung eines Luftspalts (10A, 10B, 10C) zwischen Anker (3) und Stator (2) radial nach innen hin zunimmt.

2. Linearstelleinheit (1) nach Anspruch 1, **dadurch gekennzeichnet, dass** die mehreren Verjüngungen (7A, 7B) und/oder die mehreren Absätze (8A, 8B) auch in Bezug auf Erstreckung in radialer Richtung unterschiedlich gestaltet sind.

3. Linearstelleinheit (1) nach einem der Ansprüche 1 oder 2, **dadurch gekennzeichnet, dass** der Anker (3) als rotationssymmetrisches Bauteil ausgeführt ist.

4. Linearstelleinheit (1) nach einem der Ansprüche 1 bis 3, **dadurch gekennzeichnet, dass** einer der mehreren Absätze (8A, 8B) zugleich einen Axialanschlag für den Anker (3) ausbildet.

5. Linearstelleinheit (1) nach einem der vorhergehenden Ansprüche, **dadurch gekennzeichnet, dass** der Stator (2) und/oder der Anker (3) aus Stahl bestehen.

6. Schalteinrichtung eines Schaltgetriebes (11) für ein Kraftfahrzeug, mit äußeren und inneren Schaltelementen zum gezielten Wählen von Übersetzungsverhältnissen und umfassend mindestens eine Linearstelleinheit (1) nach einem der Ansprüche 1 bis 5.

7. Schalteinrichtung nach Anspruch 6, **dadurch gekennzeichnet, dass** die mindestens eine Linearstelleinheit (1) eine je zugehörige Schaltschiene oder Schiebemuffe betätigt.

8. Schalteinrichtung nach Anspruch 6, **dadurch gekennzeichnet, dass** das Schaltgetriebe (11) nach Art eines Handschaltgetriebes ausgebildet ist, wobei die mindestens eine Linearstelleinheit (1) eine Schaltkraft (F_{S}) eines Fahrzeugführers mit der Stellkraft (F_{ST}) überlagert.

## Claims

1. Linear actuating unit (1) for a shifting device of a motor-vehicle gearbox,
having a stator (2) which is composed of a ferromagnetic material and carries a plurality of magnet coils (5A, 5B) which lie behind one another in the longitudinal direction and individually form a magnetic field when an electric current is passed through, and
having a ferromagnetic armature (3) which is arranged concentrically in the stator (2), is guided displaceably in the longitudinal direction and, under the action of a magnetic field, performs a translatory movement in the direction of the magnet coils (5A; 5B) which generate the said magnetic field,
**characterized in that**,
at its ends in the longitudinal direction, the armature (3) has a plurality of circumferential tapered sections (7A, 7B) which are of step-like configuration and are operatively connected to a plurality of radially inwardly directed shoulders (8A, 8B) which are provided on the stator (2), in such a way
that an increase in an actuating force (F_{ST}) can be changed as a function of an axial relative position of the armature (3) with respect to the stator (2) and an associated relative overlap of the tapered sections (7A; 7B) with the shoulders (8A; 8B), to which end
the plurality of tapered sections (7A, 7B) and the plurality of shoulders (8A, 8B) in each case have an extent in the axial direction and an extent in the radial direction, and in each case have a pitch which is formed from the ratio of the said axial extent to the said radial extent,
both the axial extents of the plurality of tapered sections (7A, 7B) being different from one another and the axial extents of the plurality of shoulders (8A, 8B) being different from one another, with the result that
the pitches of the plurality of shoulders (8A, 8B) and the pitches of the plurality of tapered sections (7A, 7B) decrease to a different extent radially towards the inside and the axial extent of an air gap (10A, 10B, 10C) between the armature (3) and the stator (2) increases radially towards the inside.

2. Linear actuating unit (1) according to Claim 1, **characterized in that** the plurality of tapered sections (7A, 7B) and/or the plurality of shoulders (8A, 8B) are also of different design in relation to their extent in the radial direction.

3. Linear actuating unit (1) according to either of Claims 1 and 2, **characterized in that** the armature (3) is configured as a rotationally symmetrical component.

4. Linear actuating unit (1) according to one of Claims 1 to 3, **characterized in that** one of the plurality of shoulders (8A, 8B) at the same time forms an axial stop for the armature (3).

5. Linear actuating unit (1) according to one of the preceding claims, **characterized in that** the stator (2) and/or the armature (3) are/is composed of steel.

6. Shifting device of a change-speed gearbox (11) for a motor vehicle, having outer and inner shifting elements for the targeted selection of transmission ratios and comprising at least one linear actuating unit (1) according to one of Claims 1 to 5.

7. Shifting device according to Claim 6, **characterized in that** the at least one linear actuating unit (1) actuates in each case one associated selector rail or slider sleeve.

8. Shifting device according to Claim 6, **characterized in that** the change-speed gearbox (11) is configured in the manner of a manual gearbox, the at least one linear actuating unit (1) superimposing a shifting force (F_{S}) of a vehicle driver with the actuating force (F_{ST}) .

## Revendications

1. Actionneur linéaire (1) pour un dispositif de commande d'une transmission de véhicule automobile,
comprenant un stator (2) qui se compose d'un matériau ferromagnétique et porte plusieurs bobines magnétiques (5A, 5B) disposées les unes derrière les autres dans la direction longitudinale, lesquelles créent un champ magnétique en particulier lors du passage d'un courant électrique, et
comprenant un induit ferromagnétique (3), qui est disposé de manière concentrique dans le stator (2) et qui est guidé de manière déplaçable dans la direction longitudinale, et qui, lors de l'action d'un champ magnétique dans la direction des bobines magnétiques produisant celui-ci (5A ; 5B), effectue un mouvement de translation,
**caractérisé en ce que**
l'induit (3) dispose, au niveau de ses extrémités dans la direction longitudinale, à chaque fois de plusieurs rétrécissements périphériques (7A, 7B) profilés en forme de gradins, qui sont en liaison fonctionnelle avec plusieurs épaulements (8A, 8B) orientés radialement vers l'intérieur et prévus sur le stator (2), de telle sorte
qu' en fonction d'une position relative axiale de l'induit (3) par rapport au stator (2) et d'un recouvrement relatif associé en conséquence des rétrécissements (7A ; 7B) par les épaulements (8A ; 8B), une augmentation d'une force de réglage (F_{ST}) puisse être modifiée, ce pour quoi
les plusieurs rétrécissements (7A, 7B) et les plusieurs épaulements (8A, 8B) présentent à chaque fois une étendue dans la direction axiale et une étendue dans la direction radiale ainsi qu'une pente respective constituée du rapport de cette étendue axiale sur cette étendue radiale,
les étendues axiales des plusieurs rétrécissements (7A, 7B) étant différentes les unes par rapport aux autres, et les étendues axiales des plusieurs épaulements (8A, 8B) étant également différentes les unes par rapport aux autres, de telle sorte que
les pentes des plusieurs épaulements (8A, 8B) et les pentes des plusieurs rétrécissements (7A, 7B) diminuent radialement vers l'intérieur de manière différente et que l'étendue axiale d'un entrefer (10A, 10B, 10C) entre l'induit (3) le stator (2) augmente radialement vers l'intérieur.

2. Actionneur linéaire (1) selon la revendication 1, **caractérisé en ce que** les plusieurs rétrécissements (7A, 7B) et/ou les plusieurs épaulements (8A, 8B) sont également configurés de manière différente par rapport à leur étendue dans la direction radiale.

3. Actionneur linéaire (1) selon l'une quelconque des revendications 1 ou 2, **caractérisé en ce que** l'induit (3) est réalisé sous forme de composant à symétrie de révolution.

4. Actionneur linéaire (1) selon l'une quelconque des revendications 1 à 3, **caractérisé en ce que** l'un des plusieurs épaulements (8A, 8B) constitue également une butée axiale pour l'induit (3).

5. Actionneur linéaire (1) selon l'une quelconque des revendications précédentes, **caractérisé en ce que** le stator (2) et/ou l'induit (3) se composent d'acier.

6. Dispositif de commande d'une transmission (11) pour un véhicule automobile, comprenant des éléments de commande extérieurs et intérieurs pour la sélection ciblée de rapports de transmission et comprenant au moins un actionneur linéaire (1) selon l'une quelconque des revendications 1 à 5.

7. Dispositif de commande selon la revendication 6, **caractérisé en ce que** l'au moins un actionneur linéaire (1) actionne un manchon de commande ou une tige de commande respectivement associé(e).

8. Dispositif de commande selon la revendication 6, **caractérisé en ce que** la transmission (11) est réalisée sous forme de transmission manuelle, l'au moins un actionneur linéaire (1) superposant une force de commande (F_{S}) d'un conducteur du véhicule à la force de réglage (F_{ST}) .
